# EUROPEAN PATENT SPECIFICATION

(11) **EP 1 174 742 B1**
(45) Date of publication and mention of the grant of the patent: **01.03.2006**
(21) Application number: 01125109.7
(22) Date of filing: 05.07.1996
(51) Int. Cl.: G02B 6/34, H01S 3/30, G02F 1/00, G02B 6/02

(54) **Method for changing the refractive index in germanium silicate glass**
Verfahren zur Änderung des Brechungsindexes in Germaniumsilikat-Glas
Procédé de modification de l'indice de réfraction dans un verre de germanosilicate

(30) Priority: 28.07.1995 RU 95113514; 04.06.1996 RU 96111058
(43) Date of publication of application: 23.01.2002
(62) Divisional of application: 96928750.7
(73) Proprietor: Sabeus Photonics, Inc., Calabasas, CA 91302 (US)
(72) Inventor: Dianov, Evgeny Mikhailovich, Moscow (RU); Prokhorov, Alexandr Mikhailovich, Moscow (RU); Starodubov, Dmitry Sergeevich, Moscow (RU); Frolov, Artem Alexeevich, Moskovskaya Oblast, Kaliningrad (RU)
(74) Representative: Sparing Röhl Henseler Patentanwälte European Patent Attorneys

(56) References cited:
- EP-A- 0 569 182
- EP-A- 0 651 479
- WO-A-93/18420
- GB-A- 2 275 347
- PATENT ABSTRACTS OF JAPAN vol. 005, no. 133 (E-071), 25 August 1981 (1981-08-25) & JP 56 070683 A (NIPPON TELEGR & TELEPH CORP), 12 June 1981 (1981-06-12)
- GOUVEIA-NETO A S: "Modulation instability and soliton-Raman generation in P/sub 2/O/sub 5/ doped silica fiber" JOURNAL OF LIGHTWAVE TECHNOLOGY, NOV. 1992, USA, vol. 10, no. 11, pages 1536-1539, XP002145614 ISSN: 0733-8724
- MELTZ G.; MOREY W.W.: 'Braff grating formation and germanosilicate fiber photosensitivity' SPIE vol. 1516, 10 May 1991 - 11 May 1991, BELLINGHAM, WA, USA, pages 185 - 199
- HILL K.O. ET AL: 'Photosensitivity in optical fiber waveguides: Application to reflection filter fabrication' APPLIED PHYSICS LETTERS vol. 32, no. 10, 15 May 1978, pages 647 - 649

## Description

### 1. FIELD OF THE INVENTION

The invention relates to a method for changing the refraction index in germanium silicate glass according to the preamble of claim 1.

The invention thus relates in general to the sphere of the laser technology, fibre- and integrated optics.

### 2. DESCRIPTION OF THE RELATBD ART

A Raman fibre laser is known emitting wavelength λ =1.48 me and composing a fibre light guide based on SiO2 + GeO2 as the active medium, an yttmbium laser emitting in the wavelength 1.117 me as the pumping source, and 5 Bragg fibre-optical gratings as the distributed reflectors for wavelengths of 1.175 me, 1.24 me, 1.31 me, 1.40 me and 1.48 that form, respectively, 5 resonators for 1st, 2nd, 3d, 4th and 5th Stokes components of Raman (stimulated combinational) scattering [S.G. Grubb, T. Strasser, W.Y. Cheung, W.A. Reed, V. Mizhari, T. Eidogan, P.J. Lemaire, A.M. Vengsarkar, D.J. DiGiovanni, D.W. Peckham, B.H. Rockhey. High-Power 1.48 me Cascaded Raman Laser in Germanium Silicate Fibres. Optical Amp. and Their Appl., Davos, USA, 15-17 June 1995, p 197-1991].

The drawbacks of this laser is its complexity caused by the necessity to use five pairs of Bragg gratings and a relatively low efficiency of converting the radiation into 5th Stokes component. Furthermore, Bragg gratings do not have a sufficient depth of the refraction index modulation.

A Raman fibre laser emitting wavelength λ = 1.48 me, comprising a fibre light guide based on SiO2 + GeO2 as the active medium, a solid body laser emitting in the wavelength of about 1 mc as the pumping source, and 6 Bragg fibre-optical gratings as the distributed reflectors for wavelengths of 1.117 mc, 1.175 mc, 1.24 mc, 1.31 me, 1.40 mc and 1.48 me that form, respectively, 5 resonators for 1st, 2nd, 3d, 4th, 5th and 6th Stokes components of Raman scattering, is known [S.G. Grubb, T. Strasser, W.Y. Cheung, W.A. Reed, V. Mizhari, T. Erdogan, P.J. Lemaire, A.M.Vengsarkar, D.J. DiGiovanni, D.W. Peckham, B.H. Rockhey. High-Power 1.48 mc Cascaded Raman Laser in Germanium Silicate Fibres. Optical Ampl. and Their Appl., Davos, USA, 15-17 June 1995, p. 197-199].

The drawbacks of this laser is its complexity caused by the necessity to use six pairs of Bragg gratings, and a relatively low efficiency of converting the radiation into 5th Stokes component. Moreover, Bragg gratings have not a sufficient depth of the refraction index modulation.

The most proximate to the claimed lasers is the known Raman laser, comprising a fibre light guide based on SiO2 + GeO2 as the active medium, a neodymium laser emitting in the wavelength of 1.06 mc as the pumping source, and 3 Bragg fibre-optical gratings as the distributed reflectors for wavelengths of 1.117 mc, 1.175 mc and 1.24 mc that form, respectively, 3 resonators for 1st, 2nd and 3d Stokes components of Raman scattering [S.G. Grubb, T. Erdogan, V. Mizhari, T. Strasser, W.Y. Cheung, W.A. Reed, P.J. Lemaire, A.E. Miller, S.C. Kosinski, G. Nykolak, P.C Becker, D.W. Peckham. 1.3 mc Cascaded Raman Amplifier in Germanium Silicate Fibres. Optical Ampl. and Their Appl.., Colorado, USA, 3-5 Aug. 1994, 187-190].

The drawbacks of this laser is its complexity caused by the necessity to use three pairs of Bragg gratings, and a relatively low efficiency of converting the radiation into 3d Stokes component.

An optical fibre is known that contains phosphorus to reduce the period of erbium ions relaxation and, as the result, the attenuation of the energy reverse transfer from erbium ions to ytterbium ions. [US patent 5 225 925, dated 06 07 95, IPC H 01 S 3/16].

The drawback of this fibre is the impossibility to obtain radiation in the wavelengths of 1.24 mc and 1.48 owing to the presence of erbium ions in composition of the optical fibre.

A Bragg grating is known that is used as a distributed reflector and implemented in the form of a portion of a fibre light guide, the core refraction index of which light guide having been modulated [US patent 5 237 576, dated 07 08 95. IPC H 01 S 3/17].

The drawback of this grating is its low efficiency for the reason that the chemical composition of the optical fibre core is not optimised.

The method is known for changing the refraction index in an optical waveguide of germanium silicate glass, inclusive of the step of acting on a fibre light guide along the optical axis by a laser radiation in the wavelength λ approximating 480 nm [K.O. Hill, Y. Fujii, D.C. Johnson and B.S. Kawasaki. Photosensitivity in optical fibre waveguides: application to reflection filter fabrication. Appl. Phys. Lett. Vol. 32910), 647-649 (1978)]. Here an argon laser having output power about 1 W and coherent wave about L = 30 cm in length was used. In this method the two-photon interaction takes place, i.e. a change in the refraction index was achieved when the absorption band of 240 nm was excited. In a fibre light guide the interference of the incoming and reflected from the face beams occurred, whereby a grating was formed in a light guide.

The drawback of this method is a slight change of the refraction index Δn (~ 10⁻⁶) and the impossibility to vary the spacing of a grating being formed.

The most proximate to the claimed method is the known method for changing the refraction index in an optical waveguide of germanium silicate glass, inclusive of the step of acting on a fibre light guide at an angle to the waveguide surface by a laser radiation having wavelength approximating 240 nm [G. Meltz, W.W. Morey, W.H. Glen. Formation of Bragg gratings in optical fibres by a transverse holographic method. Opt. Lett. Vol. 14 (15), 823-825 (1989)]. In particular, in the said method, a change of the refraction index can be attained by action of radiation of second harmonic of an argon laser (λ = 244 nm), fourth harmonic of a neodymium laser (λ = 266 nm), an excimer laser based on KrF (λ = 248 nm), or a dye laser (λ= 240 nm). In the real practice an excimer laser is commonly used, which is the most unreliable, the most complex and expensive amongst the lasers mentioned above.

Radiation of second harmonic of an argon laser has a sufficiently great output power (W~ 0.2 W) and coherent length (L ~ 5 cm), therefore using the same a grating in a fibre light guide is formed by the interference effect directing two beams at angle ϕ to the light guide surface. However the resulting effective length is not sufficient to form a grating in the case when the radiation is directed along the axis of a fibre light guide due to an high absorption, which is impermissible. Changing angle ϕ the spacing of the grating being formed can be varied. By a similar method a change of the refraction index can be achieved by action of radiation of fourth harmonic of a neodymium laser (W ~ 1 W), coherent length of which is L ~ 2-3 cm. Unfortunately, use of this laser is not efficient enough, as the radiation hits the edge of the band of absorption of germanium silicate glass, which is maximum 240 nm. A powerful radiation of an excimer laser (W > 2 W) and second harmonic of a dye laser that hit the centre of the band of absorption of germanium silicate glass ensures a sufficiently great change of the refraction index (Δ ~ 10⁻³). But radiation emitted by these lasers has a little coherent length (L < 1 mm), and that makes the use of the interference effect during formation of gratings rather difficult (the gratings arc formed using special expensive and non-durable quartz masks, wherethrough the laser radiation is passed).

The main drawback of the said method is the use of a too short-wave laser radiation resulting in degradation of the optical elements (that increases as the output power grows) and additional stimulated losses in the optical elements and fibre light guides (in particular, a wide band of absorption of fibre light guides, being 290 nm at most), and this prevents formation of extended and several gratings. Such radiation is not allowed to be passed by polymer claddings of the standard fibre light guides, which makes the formation of gratings therein difficult (the light guides are to be relieved from the cladding). Moreover, the laser sources used in the prototype do not provide a sufficient reliability.

A further method for changing the refraction index in an optical wave guide is shown in PCT application number WO 93 18420 A to Ainslie et al. The method shows silica/germania glass in reduced form may be irradiated with 275 nm wavelength light at an angle of incidence to alter the refraction index of the glass to produce a reflection grating.

MELTZ G., MOREY W.W.: 'Bragg grating formation and germanosicilicate fiber photosensitivity', SPIE, BELLINGHAM, WA, USA, 10 May 1991 - 11 May 1991, vol. 1516, no., pages 185 to 199, describes a method for changing the refractive index in germanium silicate glass.

### SUMMARY OF INVENTION

The invention is defined in claim 1,

Further features are defined in the dependent claims and in the description.

### 4. Brief Description of Drawings

The invention will be described in conjunction with the accompanying drawings. Figs. 1 and 2 show versions of a Raman fibre laser emitting wavelengths of 1.24 mc and 1.48 mc, respectively. Fig. 3 schematically illustrates a Bragg fibre-optical grating. Fig. 4 shows the absorption spectrum that is characteristic of germanium silicate glass. Figs 5, 6 and 7 schematically show versions of relative positions of a portion of a fibre light guide and a laser radiation beam during formation of a Bragg grating.

### 5. Description of Invention Embodiments

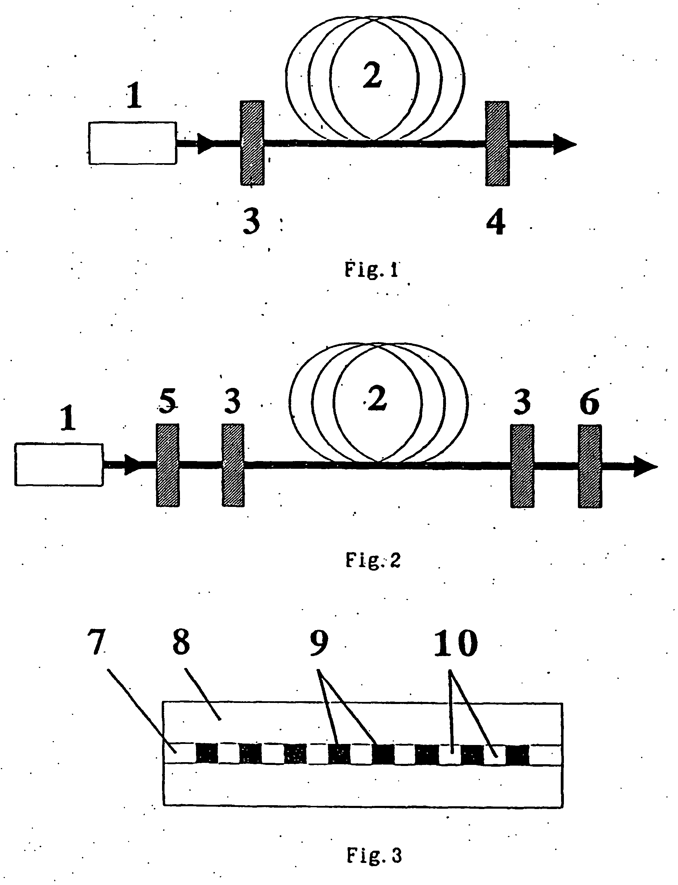

A Raman laser emitting wavelength of 1.24 mc (Fig. 1) comprises a pumping source 1, a fibre light guide 2, portions of the fibre light guide being Bragg fibre-optical gratings 3 and 4, grating 3 forming a blank distributed reflector of an optical resonator for first Stokes component, and reflector 4 is the output distributed reflector for the same resonator. Type of the pumping source 1 and, if feasible, that of its restructuring, and length of wave of its radiation are selected on the basis of the necessity of fine tuning of a Raman fibre laser radiation wavelength.

Laser (Fig. 1) operates in the following manner. Pumping radiation from the source 1 is converted in the fibre light guide 2 owing to the forced combinational scattering. In the prototype, at the output, third Stokes component was derived; in the laser of Fig. 1 derived is first Stokes component. Efficiency of conversion into first Stokes component is obviously higher than that into third one, and the conversion itself is simpler. To enhance the efficiency, in the laser (Fig. 1), as in the prototype, the resonance conversion during a multiple passage of the first Stokes component radiation through the resonator formed by reflectors (Bragg gratings) 3 and 4 is used. However, in the prototype, creation of optical resonators not only for first, but also for second and third Stokes components is required.

The Raman fibre laser for wavelength of 1.48 mc (Fig. 2) in comparison with the first version (Fig. 1) additionally comprises portions of the fibre waveguide that are Bragg fibre optical gratings 5 and 6, grating 5 forming a blank distributed reflcetor of the optical resonator for second Stokes component, and reflector 6 - the output distributed reflector for the same resonator. Moreover, there is second grating 3 instead of grating 4. In this laser (Fig. 2) second Stokes component is derived, while in the most proximate analogue - sixth one. Efficiency of conversion into second Stokes component is obviously higher than that into sixth one, and the conversion itself is simpler. The analogue requires creation of optical resonators for first, second, third, fourth, fifth and sixth Stokes components, while in the laser of Fig.2 - only for first and second ones.

The Bragg fibre-optical grating of Fig.3, as in the prototype, is a portion of the fibre light guide, comprising a core 7 and a cladding 8, in said core sections of a higher 9 and a normal (i.e. a lower than the average value) 10 refraction index are periodically alternated . This grating operates exactly in the same manner as in the prototype. The only distinction is that in the grating of Fig. 3 a greater difference between the maximum and the minimum values of the refraction index (modulation depth) is provided owing to a new composition of the fibre light guide. Stokes components associated with the dopes were suppressed using an additional long-spacing grating or a special outputting grating introduced into the resonator.

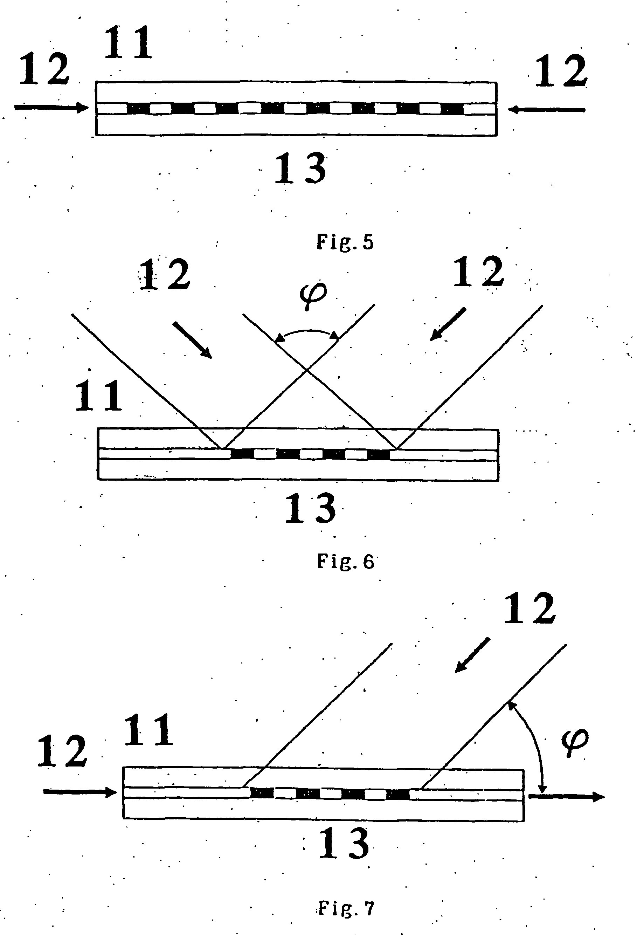

In the course of formation of a Bragg fibre-optical grating in case of the longitudinal geometry (Fig. 5), the laser radiation 12 is directed along the optical axis of the light guide 11; in case of the transverse geometry (Fig. 6), the laser radiation 12 is directed at angle ϕ to the surface of the light guide 11; and in case of the longitudinal-transverse geometry (Fig. 7), the laser radiation 12 is directed simultancously along the optical axis of the light guide 11 and at an angle to its surface. Figs. 5, 6 and 7 show also an area 13 wherein a grating is formed (in Fig. 5 it occupies the entire portion of the fibre light guide 11). Direction of laser beams 12 in Figs. 5, 6 and 7 are shown by arrows.

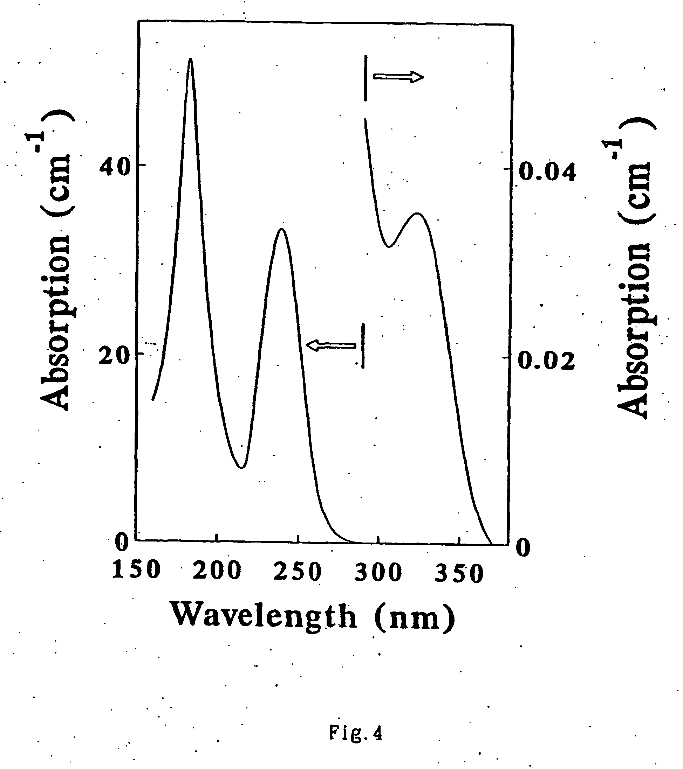

Experiments have shown that the change of the refraction index of germanium silicate glass required for the industrial applicability can be provided by action of the laser radiation having a wavelength hitting not only the traditionally utilised bands of absorption near wavelengths of 180 and 240 nm, but also a weaker band of absorption having a wavelength approximating 330 nm (Fig. 4). Such radiation is passed through a protection polymer cladding of fibre light guides. For provision of a radiation wavelength within the range from 270 to 390 nm, lasers that are more reliable and durable than those of the prototype can be used. Particularly, it is clear that a neodymium laser is a more reliable radiation source, when third harmonic of its radiation is used (as in the claimed method), not fourth one (as in the prototype). The same is true for an argon laser: in the claimed method one of the main lines of radiation is used, while in the prototype - second harmonic.

Our experiment has demonstrated that a leaser absorption by germanium silicate glass in the said range in no way prevents creation of a desired change of the refraction index. Also it was discovered that at the maximum band of absorption near 290 nm, there are no stimulated losses at all. Slight losses in the said range allow to form gratings not only in the transverse (Fig. 6), but also in the longitudinal (Fig. 5) and the transverse-longitudinal (Fig. 7) geometries. In the longitudinal geometry (Fig. 5) the grating spacing is invariable, and in the transverse geometry (Fig. 6) and the longitudinal-transverse geometry (Fig. 7) it can be vaied by changing ϕ angle.

In with the prototype, a radiation with longer wavelengths (with a lesser energy of photons) used in the claimed method does not result in a noticeable degradation of the optical elements.

A known fibre neodymium laser having output power of 1.5 W, with length of a fibre light guide of 30 m, core of which laser contains 0.5 % by weight of Nd, was used as the pumping source 1. Bragg gratings 3, 4, 5 and 6 were implemented in the form of portions of the optical fibre 1 m long, the core 7 of which fibre contained 21 mole % of GeO2, and its refraction index having been properly modulated, and the modulation depth reached 8 x 10⁻⁴. The reflection factor of gratings 3 and 5 at wavelengths of 1.24 mc and 1.48 mc was, respectively, 99%, and the reflection factor of gratings 4 and 6 at waves 1.24 mc and 1.48 mc long was, respectively, 20%. The fibre light guide 2 was 10 m long, and its core contained 19 mole % of P2O5. The fibre light guide of the neodymium laser 1, the fibre light guide 2 and the fibre light guides of Bragg gratings 3, 4, 5 and 6 had standard transverse dimensions. These lght guides were fabricated according to the standard technology using the method of chemical precipitation from gaseous phase [Devyatykh G.G., Dianov E.M. Fibre Light Guides with Low Optical Losses. USSR Acad. of Sc. Courier, 1981, iss. 10, p. 54-66]. They were welded into an entity.

In the apparatus realising the claimed method one of the following lasers was used: 1) argon laser (ultraviolet radiation with wavelength of 333, 350 and/or 364 nm); 2) neodymium laser based on yttrium-aluminium garnet (third harmonic with wavelength of 355 nm); 3) nitrogen laser (with wavelength of 330 nm); 4) krypton laser (with wavelength of 350 nm); 5) helium-cadmium laser (ultraviolet radiation with wavelength of 330 and/or 350 nm). All these lasers are essentially more reliable and durable than the traditionally used KrF-based excimer one. Provision of a sufficiently powerful radiation of second harmonic of an argon laser having wavelength of 244 nm for the purpose to form gratings is more difficult than to obtain the radiation of its basic frequency. Similarly, it is more difficult to provide and use the radiation of fourth harmonic than its third harmonic. In the apparatus that would realise the claimed method, excimer lasers emitting in the wavelength of 308 nm, 351 nm, 352 nm can be used, but in this case realisation of all the benefits of the claimed method will not be carried out. Parameters of the used lasers and the geometry of the experiment are given in the Table below.

In particular, using the claimed method a long-spacing grating in a fibre light guide of germanium silicate glass was created. A fibre light guide was implemented both using the hydrogen atmosphere, and without utilisation of a processing by hydrogen. Gratings were formed both by the interference method (Fig. 5, 6 and 7), and using one focused laser beam ("point-by-point" mode).

Testing of gratings having spacing of 200 mc fabricated utilising the claimed method demonstrated that they are as serviceable as those using the prototype, the refraction index change exceeding Δn ~ 10⁻⁴. Moreover, the additional losses characteristic of the prototype were absent. When the germanium silicate glass obtained in the presence of hydrogen was used, an essential reduction of the stimulated losses was observed.

Testing of Raman fibre lasers (Figs. 1 and 2) having Bragg gratings (Fig. 3) executed according to the claimed inventions demonstrated that the set objective is attained when they arc used, i.e. simplification of Raman fibre lasers emitting in the wavelength of 1.24 mc and 1.48 mc is provided, and in Raman scattering the efficiency of the radiation conversion increases.

### 6. Industrial Applicability

The inventions are industrially applicable in devices for pumping devices in fibre amplifiers of the signals that are used in the broadband fibre-optical communication systems instead of the electronic repeaters. The claimed method can also be used for fabricating the fibre and waveguide optics elements made of germanium silicate glass, and in particular - the fibre-optical Bragg and long-spacing gratings, scattering compensators, integrated-optical waveguides, etc.

**Table Examples of Specific Embodiments**

| **Laser** | λ nm | Mode | W | L | Geometry |
|---|---|---|---|---|---|
| Argon | 333-364 | cont | 5 | 30 | Figs. 5 and 7 |
| Nd: Yag (3d harmonic) | 355 | pulse | 3 | 3 | Fig. 6 |
| | | | | | |
| Nitrogen | 337 | pulse | 0.5 | 0.1 | Fig. 6 |
| He-Cd | 325 | pulse | 0.07 | 50 | Figs. 5 and 7 |
| Krypton | 338-356 | cont | 1 | 30 | Fig. 5 and 7 |
| Argon (2nd harmonic) | 244 | cont | 0.2 | 5 | Fig. 6 |
| Nd:YAG (4th harmonic) | 266 | Pulse | 1 | 1 | Fig. 6 |
| Excimer KrF | 248 | pulse | 2 | >0.1 | Fig. 6 |
| Excimer XeCl | 308 | pulse | 2 | >0.1 | Fig. 6 |
| Excimer XeF | 352,352 | pulse | 2 | >0.1 | Fig. 6 |

## Claims

1. A method for changing the refraction index in germanium silicate glass comprising the step of exposing an element (11) formed from germanium silicate glass to laser radiation (12) having a wavelength within the range from 270 to 390 nm directed at an angle to the surface, **characterized by** the laser radiation penetrating a protective polymer cladding of the element (11) to change the refractive index of the germanium silicate glass.

2. The method of claim 1, **characterized in that** the element (11) is an optical waveguide.

3. The method of claim 2, **characterized in that** the element (11) is implemented in the form of a plate.

4. The method of claim 2, **characterized in that** the element (11) is implemented in the form of a fibre light guide.

5. The method of one of the claims 1 to 4, **characterized in that** the laser radiation is the ultraviolet radiation of an argon laser, third harmonic of radiation of a neodymium laser, radiation of nitrogen laser, the ultraviolet radiation of a krypton laser, or the ultraviolet radiation of a helium-cadmium laser.

## Patentansprüche

1. Verfahren zum Verändern des Brechungsindexes in Germaniumsilikatglas umfassend den Schritt, ein Element (11) aus Germaniumsilikatglas Laserstrahlung (12) einer Wellenlänge im Bereich von 270 bis 390 nm, welche in einem Winkel auf die Oberfläche gerichtet sind, auszusetzen, **dadurch gekennzeichnet, daß** die Laserstrahlung einen Schutzpolymerüberzug des Elementes (11) durchdringen, um den Brechungsindex des Germaniumsilikatglases zu verändern.

2. Verfahren nach Anspruch 1, **dadurch gekennzeichnet, daß** das Element (11) ein optischer Hohlleiter ist.

3. Verfahren nach Anspruch 2, **dadurch gekennzeichnet, daß** das Element (11) in Form einer Platte ausgebildet ist.

4. Verfahren nach Anspruch 2, **dadurch gekennzeichnet, daß** das Element (11) in Form eines Faserlichtleiters ausgebildet ist.

5. Verfahren nach einem der Ansprüche 1 bis 4, **dadurch gekennzeichnet, daß** die Laserstrahlung Ultraviolettstrahlung eines Argonlasers, dritte harmonische Oberschwingungen der Strahlung eines Neodymiumlasers, Strahlung eines Stickstofflasers, Ultraviolettstrahlung eines Kryptonlasers oder Ultraviolettstrahlung eines Helium-Cadmium-Lasers sind.

## Revendications

1. Procédé permettant de changer l'indice de réfraction dans un verre de silicate de germanium, comprenant l'étape consistant à exposer un élément (11) constitué de verre de silicate de germanium à un rayonnement laser (12) ayant une longueur d'onde dans la plage comprise entre 270 et 390 nm, orienté selon un certain angle par rapport à la surface, **caractérisé en ce que** le rayonnement laser pénètre dans une gaine polymère protectrice de l'élément (11) pour changer l'indice de réfraction du verre de silicate de germanium.

2. Procédé selon la revendication 1, **caractérisé en ce que** l'élément (11) est un guide d'ondes optique.

3. Procédé selon la revendication 2, **caractérisé en ce que** l'élément (11) est mis en oeuvre sous la forme d'une plaque.

4. Procédé selon la revendication 2, **caractérisé en ce que** l'élément (11) est mis en oeuvre sous la forme d'un conduit de lumière à fibres.

5. Procédé selon l'une quelconque des revendications 1 à 4, **caractérisé en ce que** le rayonnement laser est le rayonnement ultraviolet d'un laser à l'argon, la troisième harmonique du rayonnement d'un laser au néodymium, le rayonnement d'un laser à l'azote, le rayonnement ultraviolet d'un laser au krypton, ou le rayonnement ultraviolet d'un laser hélium / cadmium.
